(19) Europäisches Patentamt / European Patent Office / Office européen des brevets

(11) EP 4 679 607 A1

(12) EUROPEAN PATENT APPLICATION

(43) Date of publication:
**14.01.2026 Bulletin 2026/03**

(21) Application number: **25185132.5**

(22) Date of filing: **25.06.2025**

(51) International Patent Classification (IPC):
***H01M 50/403*** (2021.01) ***H01M 50/414*** (2021.01)
***H01M 50/44*** (2021.01) ***H01M 50/449*** (2021.01)
***H01M 10/0525*** (2010.01) ***H01M 50/198*** (2021.01)
***H01M 50/434*** (2021.01) ***H01M 50/446*** (2021.01)

(52) Cooperative Patent Classification (CPC):
**H01M 50/403; H01M 50/198; H01M 50/414; H01M 50/434; H01M 50/44; H01M 50/446; H01M 50/449;** H01M 10/0525; H01M 50/417; H01M 50/42; H01M 50/423; H01M 50/426; H01M 50/461; H01M 50/489

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **05.07.2024 KR 20240088784**

(71) Applicants:
- **SK Innovation Co., Ltd.**
  **Seoul 03188 (KR)**
- **SK ie technology Co., Ltd.**
  **Jongno-gu**
  **Seoul**
  **03188 (KR)**

(72) Inventor: **JI, Sang Yoon**
**34124 Daejeon (KR)**

(74) Representative: **Prüfer & Partner mbB**
**Patentanwälte · Rechtsanwälte**
**Sohnckestraße 12**
**81479 München (DE)**

# (54) COMPOSITE SEPARATOR AND SECONDARY BATTERY INCLUDING THE SAME

(57) Provided are a composite separator including: a porous substrate, and an adhesive layer which is provided on at least any one surface of the porous substrate and includes a core-shell type polymer fiber, and a secondary battery including the same.

FIG. 1

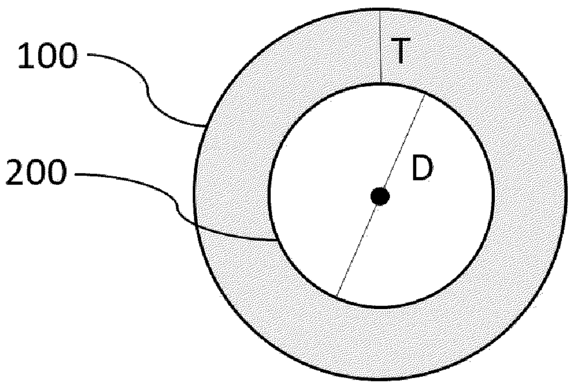




Processed by Luminess, 75001 PARIS (FR)

## Description

### TECHNICAL FIELD

The following disclosure relates to a composite separator and a secondary battery including the same.

### BACKGROUND

Recently, in order to be applied to electric vehicles and the other device with high electric supplement, a secondary battery has a higher capacity and is larger. As a part thereof, an electrode-separator combination technology of stacking an electrode and a separator and integrating them has been developed. However, since a conventional secondary battery having an electrode-separator combination structure has a weak binding force between the electrode and the separator, a defect of becoming separated between the electrode and the separator occurs or the alignment thereof is disturbed. Thus, a larger size and a higher capacity are not achieved substantially.

A separator having improved adhesive performance by adding a large amount of the polymer resin may be used for solving the problems, but the separator has various problems to degrade battery performance, such as the polymer resin dissolving and eluting into an electrolyte or the polymer resin being swollen by the electrolyte to block a pore layer in the separator, during charge/discharge of a secondary battery.

In order to solve the above problems, there is an urgent demand for the development of a new separator which may have high adhesiveness even with a small amount of an adhesive material, may function as a buffer against swelling, may suppress swelling, and has less electrolyte elution.

### SUMMARY

An embodiment of the present disclosure is directed to providing a composite separator which may adhere to an electrode, an electrochemical device comprising the composite separator, a method for manufacturing and for storing and/or transporting the same, and use of the electrochemical device for manufacturing various devices or equipment comprising the electrochemical device.

An embodiment of the present disclosure is directed to providing an electrochemical device, especially a lithium secondary battery including the composite separator according to an exemplary embodiment, and a method for manufacturing the same.

In one general aspect, a composite separator includes: a porous substrate and an adhesive layer which is provided on at least any one surface of the porous substrate and includes a core-shell type polymer fiber, the structure of which has a core and a shell on a cross-section.

In an exemplary embodiment, the core-shell type polymer fiber may include a polymer having a glass transition temperature of 60°C or higher in the shell and a polymer having a glass transition temperature of lower than 60°C in the core.

In an exemplary embodiment, the polymer included in the shell may fail at a pressure of 3 $kgf/cm^2$ (29.42 N/ $cm^2$) or more.

In an exemplary embodiment, the adhesive layer may have adhesive strength generated by the polymer included in the core at a pressure of 3 $kgf/cm^2$ (29.42 N/ $cm^2$) or more and a temperature of 60°C or higher.

In an exemplary embodiment, the polymers included in the core and the shell may be independently of each other any one or more selected from the group consisting of styrene-based polymers, acryl-based polymers, vinyl-based polymers, fluorine-based polymers, and copolymers thereof.

In an exemplary embodiment, the porous substrate may include a porous polyolefin polymer film.

In an exemplary embodiment, the porous substrate may include a porous polyolefin polymer film and a porous inorganic particle layer provided on at least any one surface of the polymer film.

In an exemplary embodiment, the porous inorganic particle layer may include one or more inorganic particles selected from the group consisting of boehmite, $BaSO_4$, $CeO_2$, MgO, CaO, ZnO, $Al_2O_3$, $TiO_2$, $BaTiO_3$, $HfO_2$, $SrTiO_3$, $SnO_2$, NiO, $ZrO_2$, $Y_2O_3$, and SiC.

In an exemplary embodiment, the core-shell type polymer fiber included in the adhesive layer may be dispersed in an amount of 0.05 $g/cm^2$ to 5.0 $g/cm^2$ per unit area of the porous substrate.

In an exemplary embodiment, the core may have a diameter of 50 nm to 2000 nm, the shell may have a thickness of 5 nm to 800 nm, and/or the adhesive layer may have a thickness of 100 nm to 3000 nm.

In an exemplary embodiment, the composite separator may have an air permeability of 100 s/100 ml to 200 s/100 ml.

In an exemplary embodiment, the composite separator may have adhesiveness, for example, when stacking adhesiveness is measured, the number of adhered electrodes is 10.

In an exemplary embodiment, the composite separator may have blocking property, for example, when blocking occurrence is measured, a coated layer of the core-shell type polymer is not transferred to the surface of the separator

In another general aspect, a method for manufacturing a composite separator includes: forming an adhesive layer including a core-shell type polymer fiber on at least any one surface of the porous substrate.

In an exemplary embodiment, the forming of an adhesive layer may be performed by electrospinning using a polymer composition for a core and a polymer composition for a shell, optionally wherein the polymer composition for a core may include 2 wt% to 30 wt%, and the polymer composition for a shell may include 2 wt% to 30 wt% with respect to the total composition weight.

In another general aspect, an electrochemical device includes: a positive electrode, a negative electrode, and the composite separator according to an exemplary embodiment.

In another general aspect, the electrochemical device is a lithium secondary battery. In still another general aspect, a method for manufacturing a secondary battery includes: placing the composite separator according to an exemplary embodiment between a positive electrode and a negative electrode, and then applying heat, pressure, or both heat and pressure to integrate the separator and the electrodes.

In an exemplary embodiment, a heat application condition may be 40°C or higher.

In an exemplary embodiment, a pressure application condition may be 1 $kgf/cm^2$ (9.8 $N/cm^2$) or more.

In an example embodiment, the electrochemical device may be used in methods for manufacturing electric vehicles, uninterruptible power supplies, battery storage power stations, and others including battery power storage for solar panels, wind power generators and other green tech power generators.

In an example embodiment, a method for storing and/or transporting the composite separator may be provided: the composite separator is stored and transported in a wound state, or wherein the composite separator is used without causing blocking each other.

Other features and aspects will be apparent from the following detailed description, the drawings, and the claims.

## BRIEF DESCRIPTION OF THE DRAWINGS

FIG. 1 simply schematizes a cross section of a core-shell type polymer fiber included in an adhesive layer of a composite separator according to an exemplary embodiment. In the present specification, the diameter of a core 200 refers to a length of a part marked with D of FIG. 1, and the thickness of a shell 100 refers to a length of a part marked with T of FIG. 1.

FIG. 2 illustrates a method for measuring stacking adhesiveness.

## DETAILED DESCRIPTION OF EMBODIMENTS

Since the embodiments described in the present specification may be modified in many different forms, the technology according to an implementation is not limited to the embodiments set forth herein. Furthermore, throughout the specification, unless otherwise particularly stated, the word "comprising", "including", "containing", "being provided with", or "having" does not mean the exclusion of any other constituent element, but rather means further inclusion of other constituent elements, and elements, materials, or processes which are not further listed are not excluded.

The numerical range used in the present specification includes all values within the range including the lower limit and the upper limit, increments logically derived from the form and spanning of a defined range, all double limited values, and all possible combinations of the upper limit and the lower limit in the numerical range defined in different forms. As an example, when it is defined that a content of a composition is 10% to 80% or 20% to 50%, it should be interpreted that a numerical range of 10% to 50% or 50% to 80% is also described in the specification of the present specification. Unless otherwise defined in the present specification, values which may be outside a numerical range due to experimental error or rounding off of a value are also included in the defined numerical range.

Hereinafter, unless otherwise particularly defined in the present specification, "about" may be considered as a value within 30%, 25%, 20%, 15%, 10%, 5%, 3%, 2%, 1%, or 0.5% of a stated value.

Unless otherwise defined in the present specification, when it is said that a part such as a layer, a film, a thin film, a region, or a plate is "on" or "above" the other part, the part may be "directly on" the other part, and also, another part may intervene therebetween.

The term "alkyl group" used in the present specification refers to a radical of a straight chain or branched chain of a carbon saturated bond, and may be substituted by any substituent.

Hereinafter, the present disclosure will be described in detail with reference to the accompanying drawings. However, it is only illustrative and the present disclosure is not limited to the specific embodiments which are illustratively described in the present disclosure.

An exemplary embodiment provides a composite separator which may adhere to an electrode, and specifically, the composite separator according to an exemplary embodiment includes a porous substrate; and an adhesive layer which is provided on at least any one surface of the porous substrate and includes a core-shell type polymer fiber.

The core-shell type polymer fiber has a structure that shows a core and a shell in a cross-section of the polymer fiber.

In an exemplary embodiment, the core-shell type polymer fiber includes a polymer in each of the core and the shell, and the shell may include a polymer having a glass transition temperature (Tg) of 60°C or higher, and/or the core may include a polymer having a glass transition temperature of lower than 60°C. Otherwise, specifically, the shell may be formed of a polymer having a glass transition temperature of 60°C or higher, and/or the core may be formed of a polymer having a glass transition temperature of lower than 60°C.

The adhesive layer according to an exemplary embodiment includes the polymer having a glass transition temperature of 60°C or higher in the shell, so that adhesive strength is not expressed/adopted at room temperature, or even in the summer, at an increased temperature during storage or transportation, or in a wound state, and thus, unnecessary or unintended adhesive strength may not be generated, and separators may not adhere to each other to allow long term storage. That is, in the core-shell type polymer fiber according to an exemplary embodiment, the shell serves as a protective layer.

In an exemplary embodiment, the glass transition temperature of the polymer included in the shell may be, for example, 60°C or higher, 65°C or higher, 70°C or higher, or 80°C or higher. Since the polymer included in the shell has a glass transition temperature of about 60°C or higher, and the shell may serve as a protective layer as long as the adhesive strength is not expressed/adopted at room temperature or in a high temperature environment of 60°C or lower, the upper limit of the glass transition temperature is not particularly limited. For example, the upper limit of the glass transition temperature of the polymer included in the shell may be 250°C or lower, 220°C or lower, 200°C or lower, 180°C or lower, or 160°C or lower.

In an exemplary embodiment, the polymer included in the core may implement adhesive strength even in mild conditions, and by having a glass transition temperature of, for example, 60°C or lower, it serves to implement adhesive strength at a temperature of 60°C or higher when the shell collapses or fails. Specifically, for example, the glass transition temperature of the polymer included in the core may be lower than the adhesion temperature when attaching an electrode, and may be 60°C or lower, 55°C or lower, 50°C or lower, or 40 °C or lower. Though the lower limit is not particularly limited, it may be -250°C or higher, -200°C or higher, -100°C or higher, -80°C or higher, -60°C or higher, - 50°C or higher, or -30°C or higher.

The polymer included in the shell according to an exemplary embodiment may collapse or fail at a pressure of 3 $kgf/cm^2$ or more (for example, regardless of temperature conditions). Specifically, since the shell has a relatively high glass transition temperature, unnecessary adhesive strength is not implemented during storage, transportation, or separator manufacture, and then when the shell adheres to an electrode (positive electrode and/or negative electrode) by applying a pressure of 3 $kgf/cm^2$ or more, the polymer of the shell collapses or fails, so that the polymer of the core flows out to implement adhesive strength. Therefore, the pressure condition may be lower than the pressure condition during adhesion to an electrode, and specifically, for example, may be 3.5 $kgf/cm^2$ or more, 4 $kgf/cm^2$ or more, 4.5 $kgf/cm^2$ or more, 5 $kgf/cm^2$ or more, 5.5 $kgf/cm^2$ or more, or 6 $kgf/cm^2$ or more. Considering an electrode adhesion process, the upper limit may be, for example, 8 $kgf/cm^2$ or less, 7 $kgf/cm^2$ or less, or 6 $kgf/cm^2$ or less.

Meanwhile, since the polymer included in the shell should not be impaired in order to maintain a role as a protective layer during manufacture of the separator, it should not collapse or fail at a pressure of less than 3 $kgf/cm^2$, 2.5 $kgf/cm^2$ or less, 2 $kgf/cm^2$ or less, or 1 $kgf/cm^2$ or less.

The adhesive layer according to an exemplary embodiment may have adhesive strength generated at a pressure of 3 $kgf/cm^2$ or more and a temperature of 60°C or higher, and the adhesive strength may be generated by the core. The pressure condition may be required for failure of the polymer included in the shell, and the temperature condition may be required for adhesive strength generation of the core. The pressure conditions may be, for example, 3.5 $kgf/cm^2$ or more, 4 $kgf/cm^2$ or more, 4.5 $kgf/cm^2$ or more, 5 $kgf/cm^2$ or more, 5.5 $kgf/cm^2$ or more, or 6 $kgf/cm^2$ or more, and the upper limit may be, for example, 8 $kgf/cm^2$ or less, 7 $kgf/cm^2$ or less, or 6 $kgf/cm^2$ or less. The temperature condition may be, for example, 60°C or higher, 70°C or higher, 80°C or higher, 90°C or higher, or 100°C or higher, and the upper limit may be 180°C or lower, 150°C or lower, or 120°C or lower.

Since the polymer included in the core and the shell may implement the storage or transport stability of the separator according to an exemplary embodiment and adhesive strength to an electrode, as long as it satisfies the glass transition temperature and/or pressure conditions described above, specific structure or type is not particularly limited, and a conventional polymer used in the separator may be used.

The dimension of the polymer fiber is not limited in the invention only if the ratio of the diameter to the length thereof is over 1, since the composite separator is formed by coating the porous substrate with the core-shell type polymer fiber, and the shell polymer prevents the core polymer from exposing to the surface of the separator. However, the properties of the core polymer may be exalted under specific temperature and/or pressure conditions based on the

polymer fiber structure.

Specifically, for example, the polymer included in the core and the shell may be independently of each other a thermoplastic polymer, or, for example, may include any one or more polymers selected from the group consisting of styrene-based polymers, acryl-based polymers (acrylic acid-based polymers and/or acrylate-based polymers), vinyl-based polymers, fluorine-based polymers, and copolymers thereof. Otherwise, the polymer may include one or more polymers selected from the group consisting of styrene-based polymers, styrene-butadiene rubber (SBR)-based polymers, acrylic acid-based polymers, acrylate-based polymers, vinyl-based polymers, polyvinylidene fluoride (PVDF)-based polymers, fluorine-based polymers, and copolymers thereof, and specifically, may include any one or more polymers selected from the group consisting of polyacrylamide, poly(meth)acrylate, acrylic acid-methacrylic acid copolymer, polystyrene, polyvinyl alcohol, polyvinyl acetate, polyvinyl acetate-polyvinyl alcohol copolymer, polyvinylpyrrolidone, polyvinylidene fluoride, polytetrafluoroethylene, polyhexafluoropropylene, polychlorotrifluoroethylene, polyfluoride-hexafluoro propylene, and copolymers thereof.

Specifically, the core may include a polymer selected from polyvinylidene fluoride, poly(meth)acrylate, and/or acrylic acid-methacrylic acid copolymer, and the shell may include a polymer selected from polyacrylamide and/or polyvinyl alcohol.

The polymer included in the core and/or the shell may include a hydroxyl group (-OH) or an ether group (-O-) in the molecule. For example, a polymer including a repeating unit represented by the following Chemical Formula 1 and/or Chemical Formula 2 may be included:

[Chemical Formula 1]

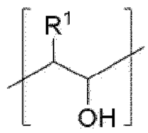

wherein $R^1$ is hydrogen, a halogen group, a hydroxyl group, $C_{1-10}$ alkyl group, or $C_{5-10}$ cycloalkyl group, and the $C_{1-10}$ alkyl group and $C_{5-10}$ cycloalkyl group may be substituted by a hydroxyl group. In an exemplary embodiment, $R^1$ may be hydrogen, a halogen group, a hydroxyl group, a $C_{1-8}$ alkyl group, a $C_{1-5}$ alkyl group, a $C_{1-3}$ alkyl group, a $C_{5-8}$ cycloalkyl group, or a $C_{5-6}$ cycloalkyl group, and the alkyl group and the cycloalkyl group of $R^1$ may be substituted by a hydroxyl group. Specifically, $R^1$ may be hydrogen.

[Chemical Formula 2]

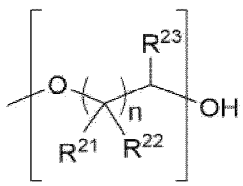

wherein $R^{21}$, $R^{22}$, and $R^{23}$ are independently of one another hydrogen, a halogen group, a hydroxyl group, $C_{1-10}$ alkyl group, or $C_{5-10}$ cycloalkyl group, and the $C_{1-10}$ alkyl group and $C_{5-10}$ cycloalkyl group may be substituted by a hydroxyl group. In an exemplary embodiment, $R^{21}$, $R^{22}$, and $R^{23}$ may be hydrogen, a halogen group, a hydroxyl group, a $C_{1-8}$ alkyl group, a $C_{1-5}$ alkyl group, a $C_{1-3}$ alkyl group, a $C_{5-8}$ cycloalkyl group, or a $C_{5-6}$ cycloalkyl group, and the alkyl group and the cycloalkyl group of $R^{21}$, $R^{22}$, and $R^{23}$ may be substituted by a hydroxyl group. Specifically, $R^{21}$, $R^{22}$, and $R^{23}$ may be hydrogen.

In Chemical Formula 2, n may be an integer of 1 to 10, 1 to 6, 1 to 5, or 1 to 3, or 1, 2, or 3. Specifically, n may be 1.

In an exemplary embodiment, the polymer may have a weight average molecular weight of 30,000 g/mol to 800,000 g/mol, 50,000 g/mol to 800,000 g/mol, 50,000 g/mol to 700,000 g/mol, 50,000 g/mol to 600,000 g/mol, or 100,000 g/mol to 500,000 g/mol, but since it is only an example, the present disclosure is not necessarily limited thereto.

In an exemplary embodiment, the polymer may have a weight average molecular weight of 50,000 g/mol to 800,000 g/mol, 100,000 g/mol to 800,000 g/mol, 100,000 g/mol to 600,000 g/mol, or 200,000 g/mol to 500,000 g/mol, but since it is only an example, the present disclosure is not necessarily limited thereto.

Since the core-shell type polymer fiber according to an exemplary embodiment may not implement adhesive strength when it does not reach specific temperature and/or pressure conditions, adhesiveness may be selectively imparted when adhesive strength implementation is needed, and antiblocking properties may be implemented therefrom.

The porous substrate according to an exemplary embodiment may include a porous polyolefin polymer film. Otherwise, the porous substrate according to an exemplary embodiment may include a porous polyolefin polymer film and a porous inorganic particle layer provided on at least any one surface of the polymer film. In an exemplary embodiment, the porous inorganic particle layer may be provided only on any one surface of the polymer film and may be formed on both surfaces.

The porous polyolefin polymer film may include, for example, polyethylene and/or polypropylene, and/or include ethylene/butene copolymer, ethylene/hexene copolymer, and ethylene/methacrylate copolymer. Otherwise, in an exemplary embodiment, the porous substrate may include non-woven fabric instead of a polyolefin polymer film. Herein, the porous polyolefin polymer film or the non-woven fabric may have a single layer or multilayer structure.

The porous polyolefin polymer film may have a thickness of 3 μm to 20 μm, 5 μm to 15 μm, 6 μm to 12 μm, or about 9 μm, but is not necessarily limited thereto.

The porous inorganic particle layer may include one or more inorganic particles selected from the group consisting of boehmite, $BaSO_4$, $CeO_2$, MgO, CaO, ZnO, $Al_2O_3$, $TiO_2$, $BaTiO_3$, $HfO_2$, $SrTiO_3$, $SnO_2$, NiO, $ZrO_2$, $Y_2O_3$, and SiC. The porous inorganic particle layer may have a thickness of 1 μm to 10 μm, 1 μm to 8 μm, 1 μm to 6 μm, 1 μm to 5 μm, 2 μm to 5 μm, or about 3 μm.

In an exemplary embodiment, the porous substrate may have a thickness of 5 μm to 30 μm, 5 μm to 20 μm, 5 μm to 15 μm, or 8 μm to 15 μm.

In an exemplary embodiment, the core-shell type polymer fiber may be dispersed in an amount of 0.05 g/cm$^2$ to 5.0 g/cm$^2$, 0.05 g/cm$^2$ to 3.0 g/cm$^2$, 0.05 g/cm$^2$ to 1.0 g/cm$^2$, 0.08 g/cm$^2$ to 1.0 g/cm$^2$, 0.1 g/cm$^2$ to 0.5 g/cm$^2$, 0.1 g/cm$^2$ to 0.3 g/cm$^2$, or about 0.2g/cm$^2$ per unit area (coating density) of the porous substrate.

In an example embodiment, the porous substrate may have an air permeability of 100 s/100 cc to 200 s/100 cc, 120 s/100 cc to 180 s/100 cc, 130 s/100 cc to 160 s/100 cc, or 130 s/100 cc to 150 s/100 cc.

In an exemplary embodiment, the core 200 may have a diameter (D) of 50 nm to 2000 nm, 50 nm to 1000 nm, 50 nm to 500 nm, 80 nm to 300 nm, 100 nm to 300 nm, 100 nm to 200 nm, or about 150 nm, but is not necessarily limited thereto. The diameter (D) of the core 200 refers to a diameter of the core indicated on FIG. 1.

In an exemplary embodiment, the shell 100 may have a thickness (T) of 5 nm to 800 nm, 20 nm to 500 nm, 20 nm to 300 nm, 50 nm to 300 nm, 50 nm to 200 nm, 50 nm to 150 nm, or about 100 nm, but is not necessarily limited thereto. The thickness (T) of the shell 100 refers to a length obtained by subtracting the radius of the core from the radius of the core-shell type polymer fiber, as shown in FIG. 1.

To measure the diameter(D) of the core and the thickness(T) of shell of a core-shell structured polymer fiber, a cross-section of the fiber was exposed and observed using a scanning electron microscope (SEM). Specifically, the target fiber was rapidly frozen under a liquid nitrogen environment, and a cross-sectional sample of the fiber was prepared using an ion milling apparatus so as to minimize damage. Thereafter, platinum (Pt) was sputtered to a thickness of about 5 to 10 nm to impart conductivity. The prepared sample was observed at a magnification of 10,000× to 100,000× using a SEM (Hitachi S4800) under an accelerating voltage of 5 kV. The boundary between the core and the shell was identified based on the interface between polymers, and the diameter(D) of the core and the thickness(T) of shell were respectively measured.

In addition to SEM, transmission electron microscopy (TEM) may also be used to measure the respective thicknesses of the core and the shell.

In an exemplary embodiment, the adhesive layer may have a thickness of 100 nm to 3000 nm, 100 nm to 2000 nm, 100 nm to 1000 nm, 200 nm to 800 nm, 300 nm to 600 nm, or 400 nm to 600 nm, but is not necessarily limited thereto.

In an exemplary embodiment, since the adhesive layer is provided on at least any one surface of the porous substrate, it may be formed on only on any one surface or both surfaces of the porous substrate. When the adhesive layer is formed on both surfaces of the porous substrate, the core-shell type polymer fiber included in each adhesive layer may be identical to or different from each other with respect to the kind of the polymers and the core diameter D and/or the shell thickness T.

In an example embodiment, the composite separator may have an air permeability of 100 s/100 ml to 200 s/100 ml, 120 s/100 ml to 180 s/100 ml, or 130 s/100 ml to 160 s/100 ml, which is measured by ASTM D1434-82.

The composite separator according to an exemplary embodiment may have a peel strength to an electrode (negative electrode and/or positive electrode) of 3.0 gf/15 mm (0.029 N/15 mm)or more, 3.5 gf/15 mm (0.034 N/15 mm) or more, 4.0 gf/15 mm (0.039 N/15 mm) or more, 4.5 gf/15 mm (0.044 N/15 mm) or more, or 4.6 gf/15 mm (0.045 N/15 mm)or more, as measured in accordance with ASTM D903. Herein, the upper limit may be 7.0 gf/15 mm (0.069 N/15 mm) or less, 6.0 gf/15 mm (0.059 N/15 mm) or less, 5.5 gf/15 mm (0.054 N/15 mm) or less, or 5.0 gf/15 mm (0.049 N/15 mm) or less.

The composite separator according to an example embodiment may be a composite separator for a secondary battery.

The composite separator according to an exemplary embodiment may have improved surface adhesive strength and be adhered to an electrode with high adhesive strength, by including the core-shell type polymer fiber. In addition, since the composite separator according to an exemplary embodiment adheres to an electrode effectively and may perform a buffer function to internally accommodate swelling by an electrolyte and the other causes, a higher capacity of a large battery may be achieved therefrom.

In addition, since the composite separator according to an exemplary embodiment may maintain adhesive strength to an electrode by swelling suppression, loss of adhesive strength due to battery swelling may be prevented, and thus, even when the electrode and the separator are repeatedly stacked, battery alignment may be maintained well.

Another exemplary embodiment provides a method for manufacturing a composite separator including: forming an adhesive layer including a core-shell type polymer fiber on at least any one surface of the porous substrate.

In an exemplary embodiment, the forming of an adhesive layer may be performed by electrospinning using a polymer composition for a core and a polymer composition for a shell. In an exemplary embodiment, the polymer composition for a core may include 2 wt% to 30 wt%, 3 wt% to 20 wt%, 5 wt% to 20 wt%, 8 wt% to 18 wt%, or 10 wt% to 15 wt% of the polymer with respect to the total composition weight. In an exemplary embodiment, the polymer composition for a shell may include 2 wt% to 30 wt%, 2 wt% to 20 wt%, 2 wt% to 15 wt%, 2 wt% to 10 wt%, 5 wt% to 10 wt%, or 5 wt% to 7 wt% of the polymer with respect to the total composition weight.

In an exemplary embodiment, the polymer compositions for a core and a shell may be prepared by adding each polymer to a solvent and then stirring at a temperature of 50°C to 100°C or about 70°C for 1 hour to 3 hours or about 1 hour.

Since the above description for the composite separator according to an exemplary embodiment may be applied to the method for manufacturing a composite separator identically, redundant description is omitted.

Another exemplary embodiment provides a secondary battery including: a positive electrode, a negative electrode, and the composite separator according to an exemplary embodiment.

In an example embodiment, the secondary battery may be a lithium secondary battery.

Another exemplary embodiment provides a method for manufacturing a secondary battery including: placing the composite separator according to an exemplary embodiment between a positive electrode and a negative electrode, and then applying heat, pressure, or both heat and pressure to integrate the separator and the electrodes.

In an exemplary embodiment, the heat application condition may be 40°C or higher, 50°C or higher, 40°C to 100°C, 40°C to 80°C, 40°C to 60°C, 50°C to 100°C, 50°C to 80°C, 50°C to 70°C, or 50°C to 60°C.

In an exemplary embodiment, the pressure application condition may be 1 kgf/$cm^2$ (9.8 N/$cm^2$) or more, 2 kgf/$cm^2$ (19.6 N/$cm^2$)or more, 3 kgf/$cm^2$ (29.4 N/$cm^2$) or more, 4 kgf/$cm^2$ (39.2 N/$cm^2$) or more, 5 kgf/$cm^2$ (49.0 N/$cm^2$) or more, 3 kgf/$cm^2$ (29.4 N/$cm^2$) to 10 kgf/$cm^2$ (98.1 N/$cm^2$), 3 kgf/$cm^2$ (29.4 N/$cm^2$) to 8 kgf/$cm^2$ (78.5 N/$cm^2$), 5 kgf/$cm^2$ (49.0 N/$cm^2$) to 10 kgf/$cm^2$ (98.1 N/$cm^2$), 5 kgf/$cm^2$ (49.0 N/$cm^2$) to 8 kgf/$cm^2$ (78.5 N/$cm^2$), or 5 kgf/$cm^2$ (49.0 N/$cm^2$) to 6 kgf/$cm^2$ (58.8 N/$cm^2$) .

Hereinafter the secondary battery according to an exemplary embodiment will be described.

[Positive electrode]

A positive electrode may include a positive electrode current collector and a positive electrode mixture layer placed on at least one surface of the positive electrode current collector.

(Positive electrode current collector)

The positive electrode current collector may include stainless steel, nickel, aluminum, titanium, or an alloy thereof. The positive electrode current collector may also include carbon, nickel, titanium, or aluminum which is surface-treated with silver, or stainless steel. Though the positive electrode current collector is not limited thereto, it may have a thickness of, for example, 10 μm to 50 μm.

(Positive electrode material)

A positive electrode mixture layer may include a positive electrode active material. The positive electrode active material may include a compound which may reversibly intercalate and deintercalate lithium ions.

According to exemplary embodiments, the positive electrode active material may include a lithium-nickel metal oxide. The lithium-nickel metal oxide may further include at least one of cobalt (Co), manganese (Mn), and aluminum (Al).

In some exemplary embodiments, the positive electrode active material or the lithium-nickel metal oxide may include a layered structure or a crystal structure represented by the following Chemical Formula A:

[Chemical Formula A] $Li_xNi_aM_bO_{2+z}$

wherein $0.9 \leq x \leq 1.2$, $0.6 \leq a \leq 0.99$, $0.01 \leq b \leq 0.4$, and $-0.5 \leq z \leq 0.1$. As described above, M may include Co, Mn, and/or Al.

The chemical structure represented by Chemical Formula A shows a bonding relationship included in the layered structure or the crystal structure of the positive electrode active material, and it does not mean that other additional elements are excluded. For example, M includes Co and/or Mn, and Co and/or Mn may be provided as a main active element of the positive electrode active material with Ni. Chemical Formula A is provided for expressing the bonding relationship of the main active elements and should be understood as a formula covering introduction of an additional element and substitution.

In an exemplary embodiment, auxiliary elements which are added to the main active elements to enhance chemical stability of the positive electrode active material, or the layered structure/crystal structure may be further included. The auxiliary element may be incorporated into the layered structure/crystal structure and form a bond, and in this case also, should be understood to be included in the range of the chemical structure represented by Chemical Formula A.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, or Zr. The auxiliary element may act as, for example, an auxiliary active element which contributes to the capacity/output activity of the positive electrode active material with Co or Mn, like Al.

For example, the positive electrode active material or the lithium-nickel metal oxide may include a layered structure or a crystal structure represented by the following Chemical Formula A-1:

[Chemical Formula A-1] $$Li_xNi_aM1_{b1}M2_{b2}O_{2+z}$$

wherein M1 includes Co, Mn, and/or Al, M2 includes the auxiliary elements described above, and $0.9 \leq x \leq 1.2$, $0.6 \leq a \leq 0.99$, $0.01 \leq b1+b2 \leq 0.4$, and $-0.5 \leq z \leq 0.1$ are satisfied.

The positive electrode active material may further include a coating element or a doping element. For example, elements which are substantially identical or similar to the auxiliary elements described above may be used as a coating element or a doping element. For example, among the elements described above, a single element or a combination of two or more elements may be used as a coating element or a doping element.

The coating element or the doping element may be present on the surface of the lithium-nickel metal oxide particles, or may be penetrated through the surface of the lithium-nickel metal composite oxide particles and included in the combined structure represented by Chemical Formula A or Chemical Formula A-1.

The positive electrode active material may include a nickel-cobalt-manganese (NCM)-based lithium oxide. In this case, an NCM-based lithium oxide having an increased nickel content may be used.

Ni may be provided as a transition metal related to the output and the capacity of a lithium secondary battery. Therefore, as described above, since a high-content (high-Ni) composition is adopted into the positive electrode active material, a high-capacity positive electrode and a high-capacity lithium secondary battery may be provided.

However, as the content of Ni increases, the long-term preservation stability and the life stability of the positive electrode or the secondary battery may be relatively reduced, and a side reaction with an electrolyte may be increased. However, according to exemplary embodiments, the life stability and the capacity retention properties may be improved by Mn while maintaining the electrical conductivity by including Co.

The content of Ni in the NCM-based lithium oxide (for example, the mole fraction of nickel of the total moles of nickel, cobalt, and manganese) may be 0.6 or more, 0.7 or more, or 0.8 or more. In some exemplary embodiment, the content of Ni may be 0.8 to 0.95, 0.82 to 0.95, 0.83 to 0.95, 0.84 to 0.95, 0.85 to 0.95, or 0.88 to 0.95.

In some exemplary embodiments, the positive electrode active material may include a lithium cobalt oxide-based active material, a lithium manganese oxide-based active material, a lithium nickel oxide-based active material, or a lithium iron phosphate (LFP)-based active material (for example, $LiFePO_4$).

In some exemplary embodiments, the positive electrode active material may include a Mn-rich-based active material having a chemical structure or crystal structure represented by Chemical Formula B, a Li rich layered oxide (LLO)/over lithiated oxide (OLO)-based active material, or a Co-less-based active material:

[Chemical Formula B] $$p[Li_2MnO_3] \cdot (1-p)\ [Li_qJO_2]$$

wherein $0<p<1$, $0.9 \leq q \leq 1.2$, and J includes at least one element of Mn, Ni, Co, Fe, Cr, V, Cu, Zn, Ti, Al, Mg, and B.

(Method for manufacturing positive electrode)

For example, the positive electrode active material may be mixed into the solvent to prepare a positive electrode slurry. After coating the positive electrode current collector with the positive electrode slurry, drying and rolling may be performed to manufacture a positive electrode mixture layer. The coating process may be performed by a method such as gravure coating, slot die coating, multilayer simultaneous die coating, imprinting, doctor blade coating, dip coating, bar

coating, and casting, but is not limited thereto. The positive electrode mixture layer may further include a binder, and may optionally further include a conductive material, a thickener, and optionally other additives. Herein, the binder and the conductive material are as described above.

(Positive electrode solvent)

A non-limiting example of the solvent used in the preparation of the positive electrode mixture may include N-methyl-2-pyrrolidone (NMP), dimethyl formamide, dimethyl acetamide, N,N-dimethylaminopropylamine, ethylene oxide, tetrahydrofuran, isobutyl butyrate, butyl butyrate, xylene, anisole, and the other suitable solvent.

(Positive electrode binder)

The binder may include a non-water-based binder and/or a water-based binder, or rubber-based binder and/or fluorine-based binder, and for example, may include polyvinylidene fluoride (PVDF), poly(vinylidene fluoride-co-hexafluoropropylene (PVDF-HFP), polyacrylonitrile, polymethylmethacrylate, acrylonitrile butadiene rubber (NBR), polybutadiene rubber (BR), styrene-butadiene rubber (SBR), and the other binder materials. In an exemplary embodiment, a PVDF-based binder may be used as a positive electrode binder.

(Positive electrode conductive material)

The conductive material may be added for increasing conductivity of the positive electrode mixture layer and/or mobility of lithium ions or electrons. For example, the conductive material may be a linear conductive material and/or a dot-shaped conductive material, and for example, may include carbon-based conductive materials such as graphite, carbon black, acetylene black, ketjen black, graphene, carbon nanotubes, vapor-grown carbon fiber (VGCF), carbon fiber, and carbon nanofiber, and/or metal-based conductive materials including tin, tin oxide, titanium oxide, perovskite materials such as $LaSrCoO_3$ and $LaSrMnO_3$, and a combination thereof, but is not limited thereto.

(Positive electrode thickener/ dispersant)

If necessary, the positive electrode mixture may further include a thickener and/or a dispersant and the other available components. As an exemplary embodiment, the positive electrode mixture may include a thickener such as carboxymethyl cellulose (CMC).

[Negative electrode]

The negative electrode may include a negative electrode current collector and a negative electrode mixture layer placed on at least one surface of the negative electrode current collector.

(Negative electrode current collector)

A non-limiting example of the negative electrode current collector may include a copper foil, a nickel foil, a stainless-steel foil, a titanium foil, a nickel foam, a copper foam, a polymer substrate coated with a conductive metal, and the other conductive sheets. The negative electrode current collector is not limited, but may have a thickness of, for example, 10 to 50 μm.

(Negative electrode material)

The negative electrode mixture layer may include a negative electrode active material. As the negative electrode active material, a material capable of adsorbing or desorbing lithium ions may be used. For example, the negative electrode active material may be a carbonaceous material such as crystalline carbon, amorphous carbon, carbon composite, and carbon fiber; lithium metal; lithium alloy; a silicon (Si)-containing material, a tin (Sn)-containing material, or a combination thereof.
An example of the amorphous carbon may include hard carbon, soft carbon, coke, mesocarbon microbead (MCMB), mesophase pitch-based carbon fiber (MPCF), and the like.
An example of the crystalline carbon may include graphite-based carbon such as natural graphite, artificial graphite, graphitized coke, graphitized MCMB, and graphitized MPCF.
The lithium metal may include a pure lithium metal or a lithium metal on which a protective layer for suppressing dendrite growth and the like is formed. In an exemplary embodiment, a lithium metal-containing layer which is deposited or

coated on a negative electrode current collector may be used as a negative electrode active material. In an exemplary embodiment, a lithium thin film layer may be used as a negative electrode active material layer.

An element included in the lithium alloy may include aluminum, zinc, bismuth, cadmium, antimony, silicon, lead, tin, gallium, indium, or the like.

The silicon-containing material may provide more increased capacity characteristics. The silicon-containing material may include Si, $SiO_x$ ($0<x<2$), metal-doped $SiO_x$ ($0<x<2$), a silicon-carbon composite, and a combination thereof. The metal may include lithium and/or magnesium, and the metal-doped $SiO_x$ ($0<x<2$) may include metal silicate.

(Method for manufacturing negative electrode)

For example, the negative electrode active material may be mixed into the solvent to prepare a negative electrode slurry. After coating/depositing the negative electrode current collector with the negative electrode slurry, drying and rolling may be performed to manufacture a negative electrode mixture layer. The coating process may be performed by a method such as gravure coating, slot die coating, multilayer simultaneous die coating, imprinting, doctor blade coating, dip coating, bar coating, and casting, but is not limited thereto. The negative electrode mixture layer may further include a binder, and may optionally further include a conductive material, a thickener, and optionally other additives.

In some exemplary embodiments, the negative electrode may include a negative electrode active material layer in a lithium metal form formed by a deposition/coating process.

(Negative electrode solvent)

A non-limiting example of the solvent for a negative electrode mixture may include water, pure water, deionized water, distilled water, ethanol, isopropanol, methanol, acetone, n-propanol, t-butanol, isobutyl isobutyrate, butyl butyrate, xylene, anisole, and the other available solvent.

(Negative electrode binder/ conductive material/ thickener)

As the binder, the conductive material, and the thickener, the materials described above which may be used in the manufacture of a positive electrode may be used.

In some exemplary embodiments, rubber-based binder such as a styrene-butadiene rubber (SBR)-based binder, carboxymethyl cellulose (CMC), a polyacrylic acid-based binder, a poly(3,4-ethylenedioxythiophene) (PEDOT)-based binder, and other suitable functions of the binder may be used as a negative electrode binder.

[Electrode assembly]

According to exemplary embodiments, the positive electrode, the negative electrode, and the separator may be repeatedly disposed to form an electrode assembly. In some exemplary embodiments, the electrode assembly may be a winding type, a stacking type, a zigzag (z)-folding type, or a stack-folding type.

[Electrolyte]

A lithium secondary battery may be defined by housing the electrode assembly in a case with an electrolyte. According to exemplary embodiments, a nonaqueous electrolyte solution may be used as the electrolyte.

(Lithium salt/ organic solvent)

A nonaqueous electrolyte solution includes a lithium salt as an electrolyte and an organic solvent, the lithium salt is represented by, for example, $Li^+X^-$, and an example of an anion ($X^-$) of the lithium salt may include $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, and a combination thereof.

The organic solvent has sufficient solubility of the lithium salt or the additive, and may include an organic compound having no reactivity in a battery. The organic solvent may include, for example, at least one of carbonate-based solvents, ester-based solvents, ether-based solvents, ketone-based solvents, alcohol-based solvents, and aprotic solvents. An example of the organic solvent may include propylene carbonate (PC), ethylene carbonate (EC), butylene carbonate, diethyl carbonate (DEC), dimethyl carbonate (DMC), ethyl methyl carbonate (EMC), methyl propyl carbonate, ethyl propyl carbonate, dipropyl carbonate, vinylene carbonate, methyl acetate (MA), ethyl acetate (EA), n-propyl acetate (n-PA), 1,1-dimethylethyl acetate (DMEA), methyl propionate (MP), ethyl propionate (EP), fluoroethyl acetate (FEA),

difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF) and 2-methyltetrahydrofuran, ethyl alcohol, isopropyl alcohol, dimethyl sulfoxide, acetonitrile, sulfolane, gamma-butyrolactone, propylene sulfite, and the other available solvents. These may be used alone or in combination of two or more.

(Additive)

The nonaqueous electrolyte solution may further include an additive. The additive may include, for example, cyclic carbonate-based compounds, fluorine-substituted carbonate-based compounds, sultone-based compounds, cyclic sulfate-based compounds, cyclic sulfite-based compounds, phosphate-based compounds, and borate-based compounds.

The cyclic carbonate-based compound may include vinylene carbonate (VC), vinylethylene carbonate (VEC), or a combination thereof.

The fluorine-substituted carbonate-based compound may include fluoroethylene carbonate (FEC) and a combination thereof.

The sultone-based compound may include 1,3-propane sultone, 1,3-propene sultone, 1,4-butane sultone, and a combination thereof.

The cyclic sulfate-based compound may include 1,2-ethylene sulfate, 1,2-propylene sulfate, and a combination thereof.

The cyclic sulfite-based compound may include ethylene sulfite, butylene sulfite, and a combination thereof.

The phosphate-based compound may include lithium difluoro bis-oxalato phosphate, lithium difluoro phosphate, and a combination thereof.

The borate-based compound may include lithium bis(oxalate) borate and a combination thereof.

[Cell structure]

For example, electrode tabs (positive electrode tab and negative electrode tab) may protrude from the positive electrode current collector and the negative electrode current collector and extend to one side of a case, respectively. The electrode tabs may be connected to electrode leads (positive electrode lead and negative electrode lead) which are fused with the one side of the case and extended or exposed to the outside of the case. For example, a pouch-type case, an angular case, a cylindrical case, a coin-type case, and the other types of the battery may be used.

Hereinafter, the examples and the experimental examples will be illustrated specifically in detail in the following. However, since the examples and the experimental examples described later only illustrate a part of one exemplary embodiment, the technology described in the present specification should not be construed as being limited thereto.

**<Experimental method>**

1. Measurement of air permeability

Air permeability was measured using a Gurley type densometer available from Toyoseiki Ltd. in accordance with JIS P8117, corrected with a thickness value, and converted into a value having no difference depending on the thickness.

2. Measurement of thickness

The thickness of the porous substrate and the separator was calculated as an average value obtained by measuring the thickness of a 10-layer separator using a contact type micrometer (Mitutoyo, Japan) and then dividing the value by 10. Further the thickness of the porous inorganic particle layer was calculated by subtracting the thickness of the polymer film from that of the porous substrate, which are measured in the same way above.

3. Measurement of electrode adhesive strength (peel strength)

Electrode adhesive strength was measured by peeling off at 180° using UTM equipment available from INSTRON Co. in accordance with ASTM D 903. The unit of the adhesive strength is N/15 mm.

4. Measurement of stacking adhesiveness

The electrode used in the measurement of electrode adhesive strength was cut into a size of 4 cm wide and 6 cm long, and 5 sheets of cut positive electrodes and 5 sheets of cut negative electrodes were stacked by being crossed on the

surface of the separator as shown in FIG. 2, adhered for 10 seconds at 49.03 N/$cm^2$ (5 kgf/$cm^2$) under a temperature atmosphere of 70 °C, and unfolded, and then the number of adhered electrodes was evaluated.

5. Evaluation of blocking occurrence

2 sheets of composite separators of 5 cm in width and 5 cm in height were stacked, and then 5 sheets of A4 sized paper were placed on and under the stacked separator, respectively. Thereafter, a pressure of 14.7 N/$cm^2$ (1.5 kgf/$cm^2$) was applied for 2 hours under a temperature atmosphere of 60°C, the stacked separator was detached, and then it was observed using SEM whether a coating layer was transferred to the surface of the separator to determine blocking occurrence. At a low magnification of 300× to 500× using an electron microscope, regions of the coating layer exhibiting morphological anomalies compared to surrounding areas were identified. Subsequently, the identified regions were further observed at a higher magnification of 1,000× to 10,000× to confirm the occurrence of delamination, where the coating layer was detached and transferred to the facing composite separator. Delamination of the coating layer was determined based on either (i) a significant reduction in the thickness of the coating layer compared to adjacent areas, or (ii) exposure of the polyethylene (PE) substrate, both of which were regarded as evidence of coating layer delamination and blocking ocurrence.

6. Evaluation of battery performance in initial impedance

A pouch type battery was assembled in a stacking manner using a positive electrode, a negative electrode, and a separator, and an electrolyte solution which was ethylene carbonate (EC)/ ethyl methyl carbonate (EMC)/ dimethyl carbonate (DMC) = 3:5:2 (volume ratio) in which 1M lithium hexafluorophosphate ($LiPF_6$) was dissolved was injected into each assembled battery to manufacture a pouch type lithium secondary battery having a capacity of 2 Ah. Evaluation of the resistance (DC-IR) of the lithium secondary battery used a J-pulse (Japan Electric Vehicle Association Standards, JEVS D 713) method which evaluates 10 second discharge and charge characteristics with 0.25 C, 0.5 C, 1.0 C, 1.5 C, 2.0 C, and 2.5 C. The average impedance of three batteries was calculated by the above method to calculate an initial average resistance value and a standard deviation thereof. A resistance comparison value refers to an increased value compared with average resistance of a porous substrate, which is not coated with the core shell type polymer fiber (in the case of Examples 1 to 4 and Comparative Examples 1, 2, and 5, Comparative Example 7; in the case of Examples 5 to 8 and Comparative Examples 3, 4, and 6, Comparative Example 8).

$$\text{Resistance comparison value (\%)} = ((\text{impedance}_{\text{average}} - \text{impedance}_{\text{substrate}}) / \text{impedance}_{\text{substrate}}) \times 100 \quad \text{[Equation 1]}$$

wherein $\text{impedance}_{\text{average}}$ is an initial average impedance value, and $\text{impedance}_{\text{substrate}}$ is an impedance value of a porous substrate, which is not coated with the core shell type polymer fiber.

6. Evaluation of battery performance after 100 cycles

In the case of a cyclic life, after charging/discharging at 0.5 C 100 times, impedance was calculated by J-pulse in the same manner as in the above measurement method, and the average and the standard deviation of the three were calculated. An impedance increase rate after charging/discharging 100 times was calculated as follows:

$$\text{Impedance increase rate (\%)} = ((\text{impedance}_{\text{100 cycles}} - \text{impedance}_{\text{initial}}) / \text{impedance}_{\text{initial}}) \times 100 \quad \text{[Equation 2]}$$

wherein $\text{impedance}_{\text{100 cycles}}$ is an impedance value after charging/discharging 100 times, and $\text{impedance}_{\text{initial}}$ is an initial impedance value.The battery deformation rate was calculated by measuring a thickness change of the battery after charging/discharging 100 times.

The thickness of the battery was obtained by measuring the thickness of the battery at 5 points (4 points of corners and 1 point of center) and calculating the average value.

[Equation 3]

$$\Delta Th(\%) = ((Th_{100} - Th_0)/Th_0) \times 100$$

wherein $Th_0$ is an initial battery thickness, and $Th_{100}$ is a battery thickness measured after charging/discharging a secondary battery 100 times.

**<Example 1>**

A polyethylene microporous membrane (ENPASS, SK Innovation, average pore size: 40 nm, weight: 5.0 g/m$^2$, air permeability: 130 s/100 ml) having a thickness of 9 $\mu$m was prepared as a porous substrate.

15 wt% of PVDF (polyvinylidene fluoride, Tg: -35°C, Mw 500,000 g/mol, Sigma Aldrich) was added to a mixed solvent of dimethylformamide (DMF)/ acetone (1/1), and then stirring was performed at 70°C for 2 hours to prepare a PVDF solution. 7 wt% of PVA (polyvinyl alcohol, Tg: 75°C, Mw 220,000 g/mol, Sigma Aldrich) was added to a mixed solvent of distilled water/ ethanol (8/2), and then stirring was performed at 70°C for 2 hours to prepare a PVA solution.

25G/17G gauge core/shell needles were used in order to form a core and a shell using the PVDF solution and the PVA solution, and both surfaces of a porous substrate were coated with a polymer fiber having a core/shell structure (core diameter (D): 150 nm, shell thickness (T): 100 nm) by a roll to roll method at a feed rate of a syringe pump of 0.3 mL/hr and 0.6 mL/hr for the core/shell, respectively, a distance between the porous substrate and the needle of 15 cm, a movement speed of the porous substrate of 0.5 mpm, and an applied voltage of 17.0 kV to form an adhesive layer (thickness: 450 nm, weight: 0.2 g/cm$^2$ (based on the adhesive layer formed on one surface)), thereby manufacturing a composite separator (air permeability: 132 s/100 ml).

**<Example 2>**

10 wt% of PAA (polyacrylamide, Tg: 160°C, Mw 120,000 g/mol, Sigma Aldrich) was added to distilled water, and then stirring was performed at 70°C for 2 hours to prepare a PAA solution. The PVDF solution prepared in Example 1 and the PAA solution were used for core and shell formation, respectively (core diameter (D): 150 nm, shell thickness (T): 100 nm), and adhesive layers (thickness: 500 nm, coating density: 0.2 g/m$^2$ (based on the adhesive layer formed on one surface)) was formed on both surfaces of the porous substrate in the same manner as in Example 1, thereby manufacturing a composite separator (air permeability: 134 s/100 cc).

**<Example 3>**

10 wt% of a butyl acrylate-based copolymer (Mw 100,000 g/mol, Tg: -30°C, Sigma Aldrich) was added to a DMF/acetone (1/1) mixed solvent, and then stirring was performed at 70°C for 2 hours to prepare an acrylate polymer solution. The acrylate polymer solution and the PVA solution prepared in Example 1 were used for core and shell formation, respectively (core diameter (D): 150 nm, shell thickness (T): 100 nm), and the same method as in Example 1 was performed, except that a feed rate was set at 0.3 mL/hr and 0.7 mL/hr for core/shell, respectively to form adhesive layers (thickness: 510 nm, coating density: 0.2 g/m$^2$ (based on the adhesive layer formed on one surface)) on both surfaces of the porous substrate, thereby manufacturing a composite separator (air permeability: 132 s/100 ml).

**<Example 4>**

A composite separator (air permeability: 133 s/100 ml) was manufactured by using the acrylate polymer solution prepared in Example 3 and the PAA solution prepared in Example 2 for core and shell formation, respectively (core diameter (D): 150 nm, shell thickness (T): 100 nm) to form adhesive layers (thickness: 470 nm, coating density: 0.2 g/m$^2$ (based on the adhesive layer formed on one surface)) on both surfaces of the porous substrate in the same manner as in Example 3.

**<Example 5>**

3 parts by weight of polyacrylamide (Mw: 150,000 g/mol, Sigma Aldrich) was added to water with respect to 100 parts by weight of boehmite ($\gamma$-AlO(OH)) having an average particle diameter (D50) of 300 nm measured by a particle size distribution analysis using a Microtrac S3500 (Microtrac Inc.) in accordance with KS A ISO 13320-1, 0.7 parts by weight of a dispersant (BYK-2018) with respect to boehmite was added, and stirring was performed to prepare a uniform aqueous slurry having a solid content of 30 wt%. Both surfaces of a polyethylene microporous having a thickness of 9 $\mu$m (ENPASS, SK Innovation, average pore size: 40 nm) were coated with the prepared aqueous slurry using bar coating at a speed of 10 m/min, and then drying and winding were performed with hot air at 45°C during a time when there was no further weight loss to manufacture a ceramic coating porous substrate (thickness: 12 $\mu$m, weight: 8.9 g/m$^2$, air permeability: 150 s/100 ml). A composite separator (air permeability: 154 s/100 ml) was manufactured by using the above manufactured ceramic coating porous substrate instead of the porous substrate used in Example 1 to form adhesive layers (thickness: 470 nm, coating

density: 0.2 $g/m^2$ (based on the adhesive layer formed on one surface) on both surfaces in the same manner.

**<Example 6>**

A composite separator (air permeability: 155 s/100 ml) was manufactured by forming adhesive layers (thickness: 480 nm, coating density: 0.2 $g/m^2$ (based on the adhesive layer formed on one surface)) on both surfaces of a porous substrate in the same manner as in Example 2 except that the ceramic coating porous substrate manufactured in Example 5 was used as the porous substrate.

**<Example 7>**

A composite separator (air permeability: 154 s/100 ml) was manufactured by forming adhesive layers (thickness: 500 nm, coating density: 0.2 $g/m^2$ (based on the adhesive layer formed on one surface)) on both surfaces of a porous substrate in the same manner as in Example 3 except that the ceramic coating porous substrate manufactured in Example 5 was used as the porous substrate.

**<Example 8>**

A composite separator (air permeability: 155 s/100 ml) was manufactured by forming adhesive layers (thickness: 480 nm, coating density: 0.2 $g/m^2$ (based on the adhesive layer formed on one surface)) on both surfaces of a porous substrate in the same manner as in Example 4 except that the ceramic coating porous substrate manufactured in Example 5 was used as the porous substrate.

**<Comparative Example 1>**

The same porous substrate as the porous substrate prepared in Example 1 was prepared as a porous substrate.
Both surfaces of the porous substrate were coated with a polymer fiber by a roll to roll method by using a 25 G gauge needle with the PVDF solution prepared in Example 1 at a feed rate of 0.5 mL/hr, a distance between the porous substrate and the needle of 16 cm, a movement speed of the porous substrate of 0.5 mpm, and an applied voltage of 12.0 kV to form adhesive layers (thickness: 420 nm, coating density: 0.2 $g/m^2$ (based on the adhesive layer formed on one surface)), thereby manufacturing a composite separator (air permeability: 134 s/100 ml).

**<Comparative Example 2>**

A composite separator (air permeability: 133 s/100 ml) was manufactured by forming adhesive layers (thickness: 440 nm, coating density: 0.2 $g/m^2$ (based on the adhesive layer formed on one surface)) on both surfaces of the porous substrate in the same manner as in Comparative Example 1, except that the acrylate polymer solution prepared in Example 3 was used instead of the PVDF solution, and the voltage was applied at 11.0 kV.

**<Comparative Example 3>**

A composite separator (air permeability: 155 s/100 ml) was manufactured by forming adhesive layers (thickness: 480 nm, coating density: 0.2 $g/m^2$ (based on the adhesive layer formed on one surface)) on both surfaces of the porous substrate in the same manner as in Comparative Example 1, except that the ceramic coating porous substrate prepared in Example 5 was used as the porous substrate.

**<Comparative Example 4>**

A composite separator (air permeability: 156 s/100 ml) was manufactured by forming adhesive layers (thickness: 480 nm, coating density: 0.2 $g/m^2$ (based on the adhesive layer formed on one surface)) on both surfaces of the porous substrate in the same manner as in Comparative Example 3, except that the ceramic coating porous substrate prepared in Example 5 was used as the porous substrate.

**<Comparative Example 5>**

A butyl acrylate-based copolymer(Tg: -20°C, Mw: 100,000 g/mol) water dispersion (Sigma Aldrich) was diluted in distilled water at 2 wt%, and then adhesive layers (thickness: 430 nm, coating density: 0.3 $g/m^2$ (based on the adhesive layer formed on one surface)) including polymer particles were formed on both surfaces of the same porous substrate as

the porous substrate used in Comparative Example 1 using bar coating, thereby forming a composite separator (air permeability: 139 s/100 ml).

**<Comparative Example 6>**

A composite separator (air permeability: 162 s/100 ml) was manufactured by forming adhesive layers (thickness: 450 nm, coating density: 0.3 g/$m^2$ (based on the adhesive layer formed on one surface)) on both surfaces of the porous substrate in the same manner as in Comparative Example 5, except that the ceramic coating porous substrate prepared in Example 5 was used as the porous substrate.

**<Comparative Example 7>**

The same porous substrate as the porous substrate prepared in Example 1 was prepared as a porous substrate.

**<Comparative Example 8>**

The ceramic coating porous substrate manufactured in Example 5 was prepared as a porous substrate.

The separators manufactured in the examples and the comparative examples were placed between the positive electrode and the negative electrode manufactured as follows, adhesion was performed at 70°C and 6 kgf/$cm^2$ for 10 seconds, electrode adhesive strength was evaluated according to 2. to 4. of <Experimental Method> above, and the results are summarized in the following Table 1.

Manufacture of positive electrode: 92 wt% of a lithium cobalt composite oxide ($LiCoO_2$) as a positive electrode active material, 4 wt% of carbon black as a conductive material, and 4 wt% of polyvinylidene fluoride (PVdF) as a binder were added to N-methyl-2-pyrrolidone (NMP) as a solvent to prepare a positive electrode mixture slurry. The prepared slurry was applied on an aluminum (Al) thin film having a thickness of 30 μm and dried at a temperature of 120°C, and roll-pressing was performed to manufacture a positive electrode having a thickness of 140 μm.

Manufacture of negative electrode: 96 wt% of graphite carbon, 3 wt% of PVdF as a binder, and 1 wt% of carbon black as a conductive material were added to NMP as a solvent to prepare a negative electrode mixture slurry. The prepared slurry was applied on a copper thin film having a thickness of 20 μm, dried at 120°C, and roll-pressed to manufacture a negative electrode having a thickness of 150 μm.

[Table 1]

| | Electrode adhesive strength | | | Evaluation of blocking occurrence |
|---|---|---|---|---|
| | Peel strength [gf/15 mm] (N/15 mm) | | Evaluation of stacking (0~10EA) | |
| | Negative electrode | Positive electrode | | |
| Example 1 | 3.9 (0.038) | 4.1 (0.040) | 10 | No |
| Example 2 | 5.0 (0,049) | 4.8 (0.047) | 10 | No |
| Example 3 | 4.9 (0.048) | 4.7 (0.046) | 10 | No |
| Example 4 | 5.0 (0.049) | 4.8 (0.047) | 10 | No |
| Example 5 | 4.5 (0.044) | 4.6 (0.045) | 10 | No |
| Example 6 | 4.8 (0.047) | 4.5 (0.044) | 10 | No |
| Example 7 | 4.9 (0.048) | 4.3 (0.042) | 10 | No |
| Example 8 | 5.0 (0.049) | 4.9 (0.048) | 10 | No |
| Comparative Example 1 | 4.6 (0.045) | 4.6 (0.045) | 10 | Yes |
| Comparative Example 2 | 4.5 (0.044) | 4.5 (0.044) | 10 | Yes |
| Comparative Example 3 | 4.5 (0.044) | 4.3 (0.042) | 10 | Yes |
| Comparative Example 4 | 4.8 (0.047) | 4.4 (0.043) | 10 | Yes |
| Comparative Example 5 | 1.9 (0.019) | 1.6 (0.016) | 7 | Yes |
| Comparative Example 6 | 1.4 (0.014) | 1.5 (0.015) | 6 | Yes |

(continued)

| | Electrode adhesive strength | | | Evaluation of blocking occurrence |
|---|---|---|---|---|
| | Peel strength [gf/15 mm] (N/15 mm) | | Evaluation of stacking (0~10EA) | |
| | Negative electrode | Positive electrode | | |
| Comparative Example 7 | 0.0 (0) | 0.0 (0) | 0 | Yes |
| Comparative Example 8 | 0.0 (0) | 0.0 (0) | 0 | Yes |

Battery performance at initial and after 100 cycles, and battery deformation rates were evaluated according to 5. and 6. of <Experimental Method> above using the separators manufactured by the examples and the comparative examples and the negative electrode and the positive electrode manufactured above, and the results are summarized in the following Table 2.

[Table 2]

| | Initial impedance | | | Impedance after 100 cycles | | | |
|---|---|---|---|---|---|---|---|
| | Average (mΩ) | Standard deviation (mΩ) | Resistance comparison value (%) | Average (mΩ) | Standard deviation (mΩ) | Impedance increase rate (%) | Battery thickness increase rate (%) |
| Example 1 | 25.42 | 0.59 | -2.64 | 29.41 | 0.98 | 14.78 | 0.90 |
| Example 2 | 25.41 | 0.48 | -2.68 | 30.22 | 0.85 | 14.98 | 0.80 |
| Example 3 | 25.46 | 0.75 | -2.49 | 30.10 | 0.44 | 15.01 | 0.95 |
| Example 4 | 25.54 | 0.58 | -2.18 | 29.75 | 0.62 | 14.98 | 0.86 |
| Example 5 | 25.01 | 0.64 | -4.21 | 29.01 | 0.75 | 14.36 | 0.93 |
| Example 6 | 25.00 | 0.44 | -4.25 | 28.87 | 0.56 | 14.34 | 0.90 |
| Example 7 | 24.98 | 0.71 | -4.33 | 28.92 | 0.37 | 14.48 | 0.90 |
| Example 8 | 24.92 | 0.59 | -4.56 | 28.30 | 0.42 | 14.20 | 0.87 |
| Comparative Example 1 | 26.18 | 0.48 | 0.27 | 31.12 | 0.75 | 18.50 | 1.20 |
| Comparative Example 2 | 26.12 | 0.65 | 0.04 | 31.22 | 0.59 | 18.24 | 1.40 |
| Comparative Example 3 | 25.79 | 0.67 | -1.23 | 32.14 | 1.28 | 20.21 | 1.50 |
| Comparative Example 4 | 25.87 | 0.61 | -0.92 | 31.98 | 1.21 | 20.11 | 1.34 |
| Comparative Example 5 | 26.15 | 0.44 | 0.15 | 32.45 | 0.44 | 19.60 | 1. 80 |
| Comparative Example 6 | 25.78 | 0.57 | -1.26 | 31.87 | 0.41 | 22.10 | 1. 60 |
| Comparative Example 7 | 26.11 | 0.54 | 0.00 | 32.15 | 1.23 | 24.20 | 3.20 |
| Comparative Example 8 | 25.80 | 0.64 | -1.19 | 31.50 | 1.42 | 24.90 | 4.30 |

As confirmed from Tables 1 and 2, the composite separator on which the adhesive layer including the core-shell type polymer fiber of the examples was formed had significantly increased adhesive strength to an electrode, as compared

with the separators on which the adhesive layer was not formed (Comparative Examples 7 and 8) and the separators on which polymer particles were formed (Comparative Examples 5 and 6). In addition, considering that the composite separators according to the examples had a low battery thickness increase rate as compared with the separators including a single fiber type polymer, not the core-shell type polymer fiber (Comparative Examples 1 to 4), it was confirmed that battery deformation was suppressed better. In addition, it was found that the composite separator according to an exemplary embodiment implemented antiblocking, unlike the separator including a single fiber type polymer, by including the core-shell type polymer fiber.

The present disclosure relates to a composite separator which may adhere to an electrode and a secondary battery including the same, and the composite separator according to an exemplary embodiment includes an adhesive layer including a core-shell type polymer. The composite separator according to an exemplary embodiment has excellent adhesive strength to an electrode and may perform a buffer function capable of accommodating swelling by an electrolyte.

Hereinabove, though an implementation has been described in detail by the examples and the experimental examples, the scope of an implementation is not limited to specific examples, and should be construed by the appended claims.

## Claims

**1.** A composite separator comprising:

a porous substrate; and
an adhesive layer which is provided on at least one surface of the porous substrate and includes a core-shell type polymer fiber.

**2.** The composite separator of claim 1, wherein the core-shell type polymer fiber includes a polymer having a glass transition temperature of 60°C or higher in the shell and a polymer having a glass transition temperature of lower than 60°C in the core, optionally wherein the polymer included in the shell collapses or fails at a pressure of 29.42 N/ $cm^2$ or more (3 $kgf/cm^2$ or more).

**3.** The composite separator of any one of the preceding claims, wherein the adhesive layer has adhesive strength generated by the polymer included in the core at a pressure of 29.42 N/ $cm^2$ or more (3 $kgf/cm^2$ or more) and a temperature of 60°C or higher.

**4.** The composite separator of any one of the preceding claims, wherein the polymers included in the core and the shell are independently of each other any one or more selected from the group consisting of styrene-based polymers, acryl-based polymers, vinyl-based polymers, fluorine-based polymers, and copolymers thereof.

**5.** The composite separator of any one of claims 1 to 4, wherein the porous substrate includes a porous polyolefin polymer film, optionally wherein the porous substrate includes a porous polyolefin polymer film and a porous inorganic particle layer provided on at least any one surface of the polymer film, preferably wherein the porous inorganic particle layer includes one or more inorganic particles selected from the group consisting of boehmite, $BaSO_4$, $CeO_2$, MgO, CaO, ZnO, $Al_2O_3$, $TiO_2$, $BaTiO_3$, $HfO_2$, $SrTiO_3$, $SnO_2$, NiO, $ZrO_2$, $Y_2O_3$, and SiC.

**6.** The composite separator of any one of the preceding claims, wherein the core of the core-shell type polymer fiber has a diameter of 50 nm to 2000 nm, and/ or wherein the shell of the core-shell type polymer fiber has a thickness of 5 nm to 800 nm.

**7.** The composite separator of any one of the preceding claims, wherein the composite separator has at least one of the following properties:

i) the core-shell type polymer fiber included in the adhesive layer is dispersed in an amount of 0.05 $g/cm^2$ to 5.0 $g/cm^2$ per unit area of the porous substrate,
ii) the adhesive layer has a thickness of 100 nm to 3000 nm,
iii) an air permeability is 100 s/100 ml to 200 s/100 ml,
iv) when stacking adhesiveness is measured as described in the description, the number of adhered electrodes is 10, and/or
v) when blocking occurrence is measured as described in the description, a coated layer of the core-shell type polymer is not transferred to the surface of the separator.

**8.** A method for manufacturing a composite separator, the method comprising: forming an adhesive layer including a core-shell type polymer fiber on at least any one surface of a porous substrate.

**9.** The method for manufacturing a composite separator of claim 8, wherein the forming of an adhesive layer is performed by electrospinning using a polymer composition for the core and a polymer composition for the shell of the core-shell type polymer fiber,
optionally wherein the polymer composition for the core includes 2 wt% to 30 wt%, and the polymer composition for the shell includes 2 wt% to 30 wt% with respect to the total composition weight.

**10.** An electrochemical device comprising a positive electrode, a negative electrode, and the composite separator of any one of claims 1 to 8.

**11.** The electrochemical device of claim 10, which is a lithium secondary battery.

**12.** A method for manufacturing a secondary battery, the method comprising:

placing the composite separator of any one of claims 1 to 7 between a positive electrode and a negative electrode, and then
applying heat, pressure, or both heat and pressure to integrate the separator and the electrodes.

**13.** The method for manufacturing a secondary battery of claim 12, wherein a heat application condition is 40°C or higher, and/or wherein a pressure application condition is 9.8 $N/cm^2$ or more (1 $kgf/cm^2$ or more) .

**14.** Use of the electrochemical device according to claim 10 in methods for manufacturing electric vehicles, uninterruptible power supplies, battery storage power stations, solar panels, and/or wind power generators.

**15.** A method for storing and/or transporting the composite separator of any one of claims 1 to 7,
wherein the composite separator is stored and transported in a wound state, or wherein the composite separator is used without causing blocking each other.

FIG. 1

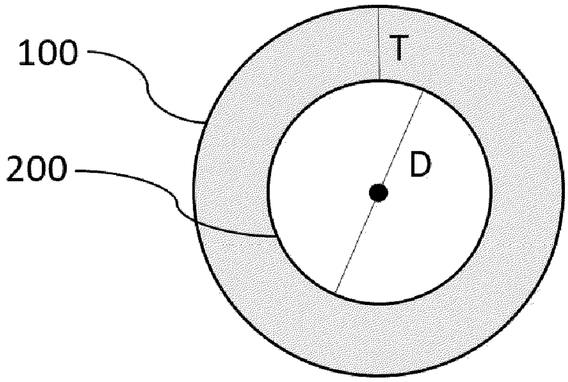
100
200
T
D

FIG. 2

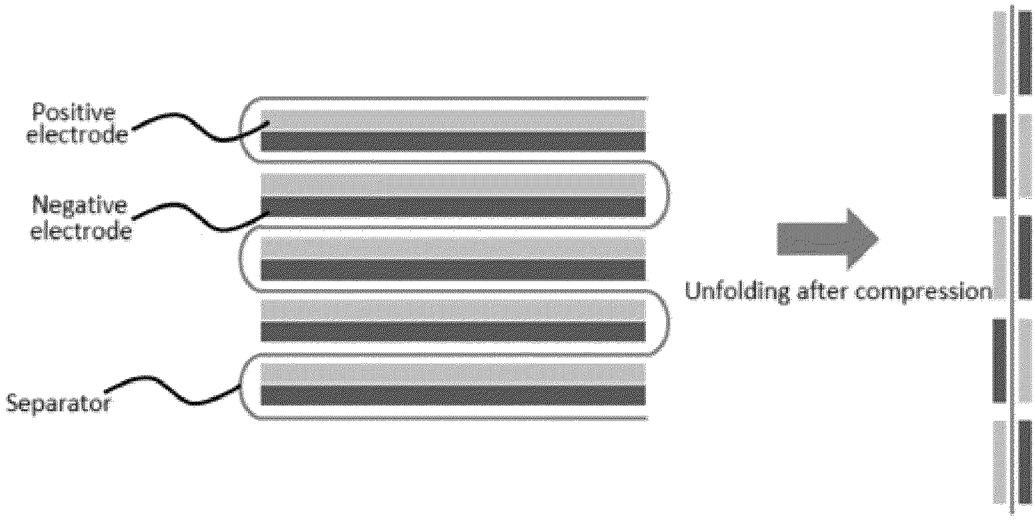
Positive electrode
Negative electrode
Separator
Unfolding after compression

Europäisches Patentamt
European Patent Office
Office européen des brevets

# EUROPEAN SEARCH REPORT

Application Number
EP 25 18 5132

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>A<br><br><br>X,P<br><br><br>A,P | CN 115 832 623 A (NINGDE CONTEMPORARY AMPEREX TECH CO LTD)<br>21 March 2023 (2023-03-21)<br>* Preparation example 10 and application example 10; claims; paragraphs 9, 16, 73 and 147; figure 5 *<br>& EP 4 510 357 A1 (CONTEMPORARY AMPEREX TECHNOLOGY CO LTD [CN])<br>19 February 2025 (2025-02-19)<br>* Preparation example 10 and application example 10; claims; paragraphs 9, 16, 73 and 147; figure 5 *<br>----- | 1,3-15<br><br><br>2<br><br><br>1,3-15<br><br><br>2 | INV.<br>H01M50/403<br>H01M50/414<br>H01M50/44<br>H01M50/449<br>H01M10/0525<br>H01M50/198<br>H01M50/434<br>H01M50/446 |
| X<br><br>A | KR 2013 0052409 A (LG CHEMICAL LTD [KR])<br>22 May 2013 (2013-05-22)<br>* examples ; claims; paragraphs 35-36 *<br>----- | 1,5-8,<br>10-15<br>2-4,9 | |
| A | YANG SHUTING ET AL: "A core-shell structured polyacrylonitrile@poly(vinylidene fluoride-hexafluoro propylene) microfiber complex membrane as a separator by co-axial electrospinning",<br>RSC ADVANCES, [Online]<br>vol. 8, no. 41,<br>1 January 2018 (2018-01-01), pages 23390-23396, XP055921116,<br>DOI: 10.1039/C8RA02035C<br>Retrieved from the Internet:<br>URL:https://pubs.rsc.org/en/content/articlepdf/2018/ra/c8ra02035c><br>[retrieved on 2025-11-15]<br>* the whole document *<br>-----<br>-/-- | 1-15 | |

TECHNICAL FIELDS SEARCHED (IPC)

H01M

The present search report has been drawn up for all claims

1

| Place of search | Date of completion of the search | Examiner |
|---|---|---|
| Munich | 16 November 2025 | Okunowski, Françoise |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 25 18 5132

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WAQAS MUHAMMAD ET AL: "Recent Development in Separators for High-Temperature Lithium-Ion Batteries", SMALL, [Online] vol. 15, no. 33, 22 May 2019 (2019-05-22), pages 1-44, XP093216960, Hoboken, USA ISSN: 1613-6810, DOI: 10.1002/smll.201901689 Retrieved from the Internet: URL:https://onlinelibrary.wiley.com/doi/full-xml/10.1002/smll.201901689> [retrieved on 2025-11-13] * the whole document * ----- | 1-15 | |
| | | | TECHNICAL FIELDS SEARCHED (IPC) |

The present search report has been drawn up for all claims

1

| Place of search | Date of completion of the search | Examiner |
|---|---|---|
| Munich | 16 November 2025 | Okunowski, Françoise |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO.

EP 25 18 5132

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2025

| Patent document cited in search report | Publication date | Patent family member(s) | Publication date |
|---|---|---|---|
| CN 115832623 A | 21-03-2023 | CN 115832623 A | 21-03-2023 |
| | | EP 4510357 A1 | 19-02-2025 |
| | | US 2025070389 A1 | 27-02-2025 |
| | | WO 2024077822 A1 | 18-04-2024 |
| KR 20130052409 A | 22-05-2013 | NONE | |

EPO FORM P0459

For more details about this annex : see Official Journal of the European Patent Office, No. 12/82